# EUROPÄISCHE PATENTANMELDUNG

(11) **EP 3 536 812 A1**
(43) Veröffentlichungstag der Anmeldung: **11.09.2019**
(21) Anmeldenummer: 18160618.7
(22) Anmeldetag: 08.03.2018
(51) Int. Cl.: C21D 1/74, C21D 1/76, C21D 6/00, C21D 6/04, C21D 9/00, C23C 8/26, C23C 8/32, C21D 1/06, C22C 38/44, F16B 25/00

(54) **BIMETALLSCHRAUBE MIT MARTENSITISCH HÄRTBAREM STAHL**

(71) Anmelder: HILTI Aktiengesellschaft, 9494 Schaan (LI)
(72) Erfinder: Pol, Frederic, 6800 Feldkirch (AT); Schneider, Roland, 6824 Schlins (AT); Bischof, Michael, 6900 Bregenz (AT)
(74) Vertreter: Hilti Aktiengesellschaft Corporate Intellectual Property

(57) **Zusammenfassung**

Die Erfindung betrifft ein Verfahren zum Herstellen einer Bimetallschraube mit einem Spitzenelement und einem Antriebselement, bei dem ein erster Rohling aufweisend einen Stahl mit 0,07 bis 0,14 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan bereitgestellt wird und das Spitzenelement aus dem ersten Rohling gefertigt wird. Die Erfindung betrifft ferner eine Bimetallschraube mit einem Spitzenelement und einem Antriebselement, wobei das Spitzenelement und das Antriebselement eine unterschiedliche Materialzusammensetzung aufweisen, und wobei das Spitzenelement zumindest bereichsweise einen Stahl mit 0,07 bis 0,14 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan aufweist.

## Beschreibung

Die Erfindung betrifft ein Verfahren zum Herstellen einer Bimetallschraube mit einem Spitzenelement und einem Antriebselement gemäss dem Oberbegriff des Anspruchs 1, sowie eine Bimetallschraube mit einem Spitzenelement und einem Antriebselement, wobei das Spitzenelement und das Antriebselement eine unterschiedliche Materialzusammensetzung aufweisen, gemäss dem Oberbegriff des Anspruchs 8.

Für Betonschrauben und Selbstbohrschrauben für Stahl-Metall-Anwendungen sind regelmässig Werkstoffkonzepte mit hoher Oberflächenhärte zumindest in Teilbereichen der Schraube, hoher Kernzähigkeit, hohem Widerstand gegenüber allgemeiner Korrosion, Lochkorrosion sowie chlorid- oder wasserstoffinduzierter Versprödung und guter plastischer Umformbarkeit erwünscht. Gemäss EP2204244 A1 und den Betonschrauben, die unter dem Namen "Hilti HUS-HR" angeboten werden, wird dies durch Hartmetall-Schneidelemente erzielt, die im Spitzenbereich der Schraube auf das Schraubengewinde aufgeschweisst sind, wobei die Schraube ansonsten aus nichtrostendem austenitischen A4-Stahl, vergleichbar 1.4401, bestehen kann.

Im Bereich der rostfreien Selbstbohrschrauben für Stahl-Metall-Anwendungen sind sogenannte Bimetallschrauben bekannt, die sich dadurch auszeichnen, dass auf das Antriebselement, also auf den Kopf und den rückwärtigen Teil des Schafts, aus austenitisch rostfreiem A2- oder A4-Stahl (vergleichbar 1.4301 bzw. 1.4401) ein bolzenförmiges Spitzenelement aus härtbarem Kohlenstoffstahl geschweisst ist. Dieser Bolzen wird nach dem Schweissen und Umformen mittels einer lokalen Wärmebehandlung gehärtet.

Die DE4033706 A1 beschreibt ein Wärmebehandlungsverfahren zur Erhöhung des Korrosionswiderstandes einer gehärteten Randschicht endformnaher Bauteile aus nichtrostenden martensitischen Stählen mit weniger als 0,4 gew.-% Kohlenstoff durch Eindiffusion von 0,2 bis 0,8 gew.-% Stickstoff in die Randschicht. Eine Anwendung in Schrauben wird von der DE4033706 A1 jedoch nicht gelehrt und insbesondere geht die DE4033706 A1 nicht auf eine Abstimmung der chemischen Zusammensetzung des Stahls und der Wärmebehandlungsparameter für eine Anwendung in Schrauben ein.

Die DE19626833A1 beschreibt ein Verfahren zur Erzeugung einer hochkorrosionsbeständigen martensitischen Randschicht über einem ferritisch-martensitischen Kern in Bauteilen aus nichtrostendem Stahl. Die chemische Zusammensetzung des Stahls ist derart eingegrenzt, dass ein ferritisch-martensitisches Gefüge vorliegt und nach dem Einsatzhärten bei einer Temperatur von 1050°C - 1150°C mit Stickstoff der Ferritanteil im Kern zwischen 40 und 90 Vol.-% liegt und die Kernhärte weniger als 300 HV30 beträgt. Eine Anwendung des Verfahrens für Schrauben wird abermals nicht gelehrt.

Die DE102013108018 A1 beschreibt eine Schraube aus einem nichtrostendenden Stahl, beispielsweise 1.4113, wobei der Stahl im Wesentlichen frei von Nickel ist, wobei eine Randschicht aufgrund einer Aufstickungswärmebehandlung bei 1000-1200°C einen gegenüber dem restlichen Gefüge erhöhten Gehalt an gelöstem Stickstoff aufweist, und wobei die Schraube in der Randschicht ein martensitisches Gefüge und ansonsten ein ferritisches Gefüge aufweist.

Die WO14040995 A1 beschreibt ein Verfahren zum Herstellen einer selbstschneidenden Betonschraube, bei dem ein Rohling aus einem martensitisch härtbaren Stahl, insbesondere mit einem Kohlenstoffgehalt kleiner 0.07%, bei einer Temperatur grösser 900°C in einer stickstoffhaltigen Gasatmosphäre gehärtet wird.

Die TW201418549 A beschreibt eine Bimetallschraube, deren Spitzenelement einen martensitschen Stahl aufweisend 0.26 bis 0.40% Kohlenstoff, 12 bis 14% Chrom, 0 bis 0.6% Nickel und 0 bis 1% Mangan enthält.

Die europäische Patentanmeldung mit dem Anmeldeaktenzeichen 17177789.9 beschreibt die Verwendung eines Stahls mit 0,07 bis 0,14 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan, zur Fertigung einer Schraubenform, wobei die Schraubenform am Ende des Verfahrens einen Teil einer fertigen Schraube bilden kann.

Die unter dem Link:
https://online.unileoben.ac.at/mu_online/wbAbs.showThesis?pThesisNr=61746&pOrgNr=1 abrufbare Zusammenfassung weist darauf hin, dass martensitische Stähle, mit dem Hochtemperaturgasaufstick-Verfahren randaufgestickt und mit 14 % Chrom, besonders geeignet für die Verwendung als Werkstoff für ein Befestigungselement sein können.

Aufgabe der Erfindung ist es, ein Verfahren zum Herstellen einer Bimetallschraube anzugeben, mit dem bei besonders geringem Herstellungsaufwand eine besonders leistungsfähige, gut montierbare und korrosionsbeständige Bimetallschraube erhalten werden kann. Weiter ist es Aufgabe der Erfindung, eine Bimetallschraube mit den vorgenannten Vorteilen anzugeben.

Die Aufgabe wird erfindungsgemäss durch ein Verfahren gemäss Anspruch 1 und eine Schraube gemäss Anspruch 8 gelöst. Bevorzugte Ausführungsformen sind in den abhängigen Ansprüchen angegeben.

Ein erfindungsgemässes Verfahren dient zum Herstellen einer Bimetallschraube, also einer Schraube, bei der das vorneliegende Spitzenelement und das hintenliegende Antriebselement eine unterschiedliche Materialzusammensetzung aufweisen. Zum Fertigen des Spitzenelements wird ein erster Rohling aufweisend einen Stahl mit einem Gewichtsanteil von 0,07 bis 0,14% gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan verwendet. Vorzugsweise besteht der erste Rohling aus diesem Stahl. Zusätzlich kann der Stahl des ersten Rohlings weitere stahlübliche Beimengungen aufweisen, beispielsweise Vanadium (insbesondere < 0,2 gew.-%), Niob (insbesondere < 0,2% gew.-%), Titan (insbesondere < 0,2 gew.-%) und/oder Silizium (insbesondere < 0.5 gew.-%). Der Rest ist Eisen mit unvermeidlichen Verunreinigungen, beispielsweise Schwefel und/oder Phosphor, insbesondere jeweils < 0,02 gew.-%. Unter den Angaben "gew.-%" können in fachüblicher Weise Gewichtsprozentangaben verstanden werden. Insbesondere kann der Stahl des ersten Rohlings als ein martensitisch härtbarer, rostfreier Stahl bezeichnet werden. Vorzugsweise weist der Stahl einen Gewichtsanteil von 0,08 bis 0,12 gew.-% Kohlenstoff auf.

Ein erster Grundgedanke der Erfindung kann darin gesehen werden, dass nichtrostende martensitische Stähle aussichtsreiche Kandidaten sein können, um die teilweise gegensätzlichen Anforderungen, die an den im Spitzenbereich einer Schraube, insbesondere einer selbstschneidenden Schraube, eingesetzten Stahl gestellt werden, zu erfüllen. Um die vielfältigen Anforderungen hinsichtlich hoher Oberflächenhärte und ausreichender Einhärtetiefe, gutem Korrosionswiderstand, guter Zähigkeit und hohem Widerstand gegenüber chlorid- oder wasserstoffinduzierter Versprödung zu erfüllen, muss die chemische Zusammensetzung des Stahls (insbesondere im Hinblick auf die Legierungsbestandteile Kohlenstoff, Chrom, Molybdän, Nickel und Mangan) sowie die für die Einstellung des Eigenschaftsprofils erforderliche mehrstufige Wärmebehandlung bestehend aus Hochtemperaturgasaufsticken, Gasphasenabschrecken, Tieftemperaturkühlen, Anlassen sowie optional lokalem Induktionshärten sorgfältig aufeinander abgestimmt werden.

Die Erfindung beinhaltet die Verwendung eines Stahls, dessen chemische Zusammensetzung auf einer Kombination der Legierungsbestandteile Kohlenstoff (0,07 - 0,14 gew.-%, vorzugsweise 0,08 - 0,12 gew.-%), Chrom (13 - 15 gew.-%), Molybdän (1,3 - 1,7 gew.-%), Nickel (1,5 - 2,0 gew.-%) und Mangan (1,0 bis 1,5 gew.-%, vorzugsweise 1,2 gew.-%) beruht, im ersten Rohling, also zur Fertigung des Spitzenelements der Bimetallschraube.

Im Rahmen der Erfindung wurde erkannt, dass mit einem solchen Stahl, insbesondere im Zusammenhang mit einer auf den Stahl abgestimmten, vorzugsweise mehrstufigen Wärmebehandlung, ein für den Spitzenbereich von Bimetallschrauben, insbesondere von Betonschrauben, besonders vorteilhaftes Eigenschaftsprofil erhalten werden kann, insbesondere im Hinblick darauf, dass der Spitzenbereich einer selbstschneidenden Schraube regelmässig für den Hauptanteil der Schneidarbeit im Substrat und für die Lasteinleitung tief im Substrat verantwortlich ist.

Wie weiter unten im Detail erläutert ist kann dieses vorteilhafte Eigenschaftsprofil insbesondere auf einer Austenitisierung mit einer Gefügestabilisierung durch Delta-Ferrit-Gehalt während der Wärmebehandlung beruhen. Insbesondere konnte ein Eigenschaftsprofil realisiert werden, das sich durch eine gute Umformbarkeit, eine hohe Oberflächenhärte von 580 HV0.3 oder höher, eine maximale Kernhärte von 450 HV0.3 oder geringer, einen hohen Widerstand gegenüber allgemeiner Korrosion und Lochkorrosion im Kern (repräsentiert durch einen PRE-Index von 17 oder höher) und in der Randzone (repräsentiert durch einen PRE-Index von 23 oder höher), eine hohe Zähigkeit im Kern (insbesondere als Folge einer Kombination eines geringen Kohlenstoffgehalts und stabilem Delta-Ferrit, wodurch das Grobkornwachstum bei der Wärmebehandlung unterdrückt wird) und einen hohen Widerstand gegenüber chlorid- oder wasserstoffinduzierter Versprödung auszeichnet. Im Detail kann der im ersten Rohling verwendete Stahl insbesondere in folgender Hinsicht vorteilhaft sein:
1) Aufgrund des Kohlenstoff-Gehalts des Stahls ist die Kernhärte maximal 450 HV0.3 oder geringer.
2) Aufgrund der Gehalte an Kohlenstoff, Chrom, Molybdän, Nickel und Mangan ergibt sich folgendes:
   a) Es kann ein relativ hoher PRE-Index (Pitting Resistance Equivalent), vorzugsweise von 17 oder höher, erreicht werden, ohne jedoch den Zustandsbereich eines martensitischen oder martensitisch-ferritischen Gefüges zu verlassen.
   b) Der Stahl weist eine gute Verarbeitbarkeit zu Halbzeugformen wie Walzdraht oder gezogenem Blankdraht auf. Sowohl Walz- als auch Blankdraht weisen eine gute Kaltumformbarkeit, vorzugsweise repräsentiert durch eine Streckgrenze Rₚ 0.2 < 650 N/mm² auf, was insbesondere für Kaltumformverfahren, vorzugsweise Walzverfahren, zur Gewindeformung vorteilhaft sein kann.
   c) Bei einem Einsatzhärten im Temperaturbereich zwischen 1000°C und 1150°C, bevorzugt zwischen 1030°C und 1100°C, kann sich im Kernbereich des erste Rohlings ein überwiegend austenitisches Gefüge (vorzugsweise zwischen 70% - 95%) mit einem geringen Anteil von Delta-Ferrit im Ausmass von 5% - 30% einstellen, wobei dieser Delta-Ferrit-Gehalt von 5% - 30% eine stabilisierende Wirkung auf das Gefüge bei den besagten Temperaturen haben kann und dadurch einer Kornvergröberung entgegenwirken kann, was sich vorteilhaft auf die Zähigkeitseigenschaften auswirken kann. Der Delta-Ferrit-Gehalt kann bewusst auf maximal 30% beschränkt sein, da bei höheren Delta-Ferrit-Gehalten die Zähigkeit wieder abnehmen könnte. Der austenitische Gefügeanteil von 70% - 95% weist eine hohe Kohlenstofflöslichkeit auf, so dass der Bildung von Chrom-Karbiden und der damit verbundenen relativ hohen Anfälligkeit gegenüber interkristalliner Korrosion effizient entgegengewirkt wird. Vorzugsweise kann ein Delta-Ferrit-Gehalt zwischen 10% und 15% vorgesehen werden, entsprechend einem Austenitgehalt zwischen 90% und 85%.
   d) Beim Einsatzhärten im vorgenannten Temperaturbereich mit Eindiffusion von Stickstoff kann sich in der Randzone des ersten Rohlings ein hauptsächlich austenitisches Gefüge einstellen, welches eine hohe Löslichkeit von Kohlenstoff und Stickstoff aufweist, so dass der Bildung von Chrom-Karbiden oder Chrom-Nitriden und der damit verbundenen Bindung von Chrom und/oder relativ hohen Anfälligkeit gegenüber interkristalliner Korrosion effizient entgegengewirkt wird.
   e) Im Anschluss an die Wärmebehandlung kann im Kernbereich des ersten Rohlings ein hauptsächlich martensitisches Gefüge mit einem geringen Anteil von Delta-Ferrit im Ausmass von 5% - 30% (bevorzugt 10% - 15%) vorliegen. Der Delta-Ferrit-Gehalt kann bewusst auf maximal 30% beschränkt sein, da bei höheren Delta-Ferrit-Gehalten die Zähigkeit wieder abnehmen könnte.
   f) Im Anschluss an die Wärmebehandlung kann in der Randzone des ersten Rohlings ein hauptsächlich martensitisches Gefüge vorliegen, so dass eine hohe Aufhärtung erzielt werden kann.
   g) Der erste Rohling kann vergleichsweise einfach mit dem zweiten Rohling zusammengefügt werden.
   h) Das aus dem ersten Rohling gefertigte Spitzenelement kann aufgrund seines vorteilhaften Korrosionsverhaltens dauerhaft zur Lastabtragung beitragen, so dass eine besonders grosse wirksame Schraubenlänge erhalten werden kann.

Vorteilhafterweise ist bei dem erfindungsgemässen Verfahren demgemäss der Schritt des Einsatzhärtens des ersten Rohlings mit Stickstoff aus der Gasphase, vorzugsweise bei Temperaturen zwischen 1000°C und 1150°C, besonders bevorzugt zwischen 1030°C und 1100°C, und/oder einem Stickstoffpartialdruck zwischen 0.05 bar und 0.3 bar, besonders bevorzugt zwischen 0.10 bar und 0.20 bar, vorgesehen, vorzugsweise im Anschluss an einen Schritt des Gewindeformens am ersten Rohlings. Durch ein solches Einsatzhärten mit Stickstoff (alleine oder, wie nachfolgend erläutert, optional in Kombination mit Kohlenstoff) kann die Randzone des ersten Rohlings in einer insbesondere für Schraubenspitzen-Anwendung besonders vorteilhaften Weise gezielt modifiziert werden. Insbesondere kann beim Einsatzhärten zwischen 1000 und 1150°C Stickstoff in der Randzone des dann austenitischen Grundgefüges gelöst werden. Im Zusammenhang mit dem erfindungsgemässen Stahl konnte durch ein solches Einsatzhärten eine Oberflächenhärte von 580 HV0.3 oder höher bei einer Grenzhärte von 550 HV0.3 in einem Abstand von der Oberfläche von 0,15 - 0,30 mm (was besonders vorteilhaft für Betonschrauben sein kann) oder 0,1 - 0,15 mm (was besonders vorteilhaft für Selbstbohrschrauben sein kann) und/oder eine Kernhärte von 350 - 400 HV0.3 erreicht werden. Diese Oberflächenhärte wiederum kann einen guten Widerstand gegen Gewindeverschleiss, auch beim Furchen in Beton sowie Bewehrungseisen, gewährleisten, was wiederum eine hohe Tragfähigkeit der Schraube ermöglicht. Darüber hinaus kann der gelöste Stickstoff den PRE-Index in der Randzone lokal auf 23 oder höher erhöhen und dadurch den Widerstand gegenüber Lochkorrosion deutlich verbessern, vorzugsweise auf ein mit einem 1.4401-Stahl vergleichbares Niveau. Insbesondere kann auch die elektrochemische Messgrösse des "Durchbruchspotenzials" auf ein mit einem 1.4401-Stahl vergleichbares Niveau gebracht werden. Die obere Grenze des Stickstoffpartialdrucks von 0.3 bar beziehungsweise 0.20 bar hat den Hintergrund, dass hiermit der Bildung von chromhaltigen und/oder stickstoffhaltigen Ausscheidungen effizient entgegengewirkt werden kann, was im Hinblick auf den Korrosionswiderstand vorteilhaft ist. Die untere Grenze des Stickstoffpartialdrucks von 0.05 bar beziehungsweise 0.10 bar hat den Hintergrund, dass erst ab diesem Druck eine massgebliche Wirkung des Stickstoffs eintritt. Die im Schritt des Einsatzhärtens vorgesehene Atmosphäre kann reiner Stickstoff oder ein Gasgemisch sein, welches bei den gegebenen Temperaturen eine gleichwertige Stickstoffaktivität aufweist. Insbesondere kann eine reine Stickstoffatmosphäre vorgesehen werden, sofern der Prozess in einem Niederdruckofen durchgeführt wird. In einem Atmosphärendruckofen könnte eine Verdünnung beispielsweise mit Edelgasen erfolgen.

Insbesondere kann im ersten Rohling eine vollständige martensitische Umwandlung erreicht werden.

Zweckmässigerweise kann vorgesehen werden, dass das Einsatzhärten des ersten Rohlings mit Stickstoff aus der Gasphase in Kombination mit einem Aufkohlen des ersten Rohlings mit Kohlenstoff aus der Gasphase erfolgt. Es kann also neben einer Erhöhung des Stickstoffgehalts zusätzlich eine Erhöhung des Kohlenstoffgehalts infolge Eindiffundierens von Kohlenstoff aus der Gasphase vorgesehen werden. Diese Ausführung basiert auf der Erkenntnis, dass bei gleichzeitiger Verfügbarkeit von Kohlenstoff und Stickstoff die Löslichkeit beider Elemente simultan erhöht werden kann, wobei mit einem höheren Stickstoffgehalt bei gleichzeitiger Vermeidung von Karbiden und Nitriden eine weitere vorteilhafte Erhöhung von Härte und Korrosionswiderstand erzielt werden kann. Um das Einsatzhärten des ersten Rohlings mit Stickstoff aus der Gasphase in Kombination mit dem Aufkohlen des ersten Rohlings mit Kohlenstoff aus der Gasphase durzuführen, können beispielsweise gasförmige stickstoffhaltige und kohlenstoffhaltige Medien getrennt voneinander und abwechselnd in die Prozesskammer eingeleitet werden. Alternativ kann ein Gasgemisch, welches sowohl Kohlenstoff als auch Stickstoff zur Verfügung stellt, verwendet werden (beispielsweise Ethin, C₂H₂, zusammen mit N₂).

Insbesondere kann das Verfahren den Schritt "Gewindeformen am ersten Rohling" aufweisen. In diesem Schritt kann am ersten Rohling eine Gewindeform angebracht werden. Insbesondere kann das Gewindeformen am ersten Rohling ein spanloses Umformen, insbesondere ein Kaltumformen, vorzugsweise ein Walzen, des ersten Rohlings beinhalten. Besonders bevorzugt ist es, dass der Schritt des Einsatzhärtens des ersten Rohlings im Anschluss an den Schritt des Gewindeformens am ersten Rohling erfolgt. Demgemäss wird das Gewinde am ersten Rohling vor dem Härten geformt. Das zeitliche Nachordnen des Einsatzhärtens an das Gewindeformen kann das Gewindeformen vereinfachen und für besonders homogene Produkteigenschaften sorgen.

Auf den Schritt des Einsatzhärtens des ersten Rohlings kann zweckmässigerweise ein Schritt des Tiefkühlens des ersten Rohlings, bevorzugt bei Temperaturen unter minus 80°C, besonders bevorzugt bei einer Temperatur von minus 150°C, und anschliessendes Anlassen des ersten Rohlings, insbesondere bei Temperaturen unter 270°C, bevorzugt bei Temperaturen zwischen 150°C und 500°C, besonders bevorzugt bei Temperaturen zwischen 200°C und 250°C, und/oder und Haltezeiten zwischen 1 Stunde und 5 Stunden, folgen. Hierdurch kann eine noch höhere Härte und/oder Zähigkeit ohne Verminderung des Korrosionswiderstands eingestellt werden.

Zwischen dem Schritt des Einsatzhärtens des ersten Rohlings und dem Schritt des Tiefkühlens des ersten Rohlings kann insbesondere ein Schritt des Abschreckens des ersten Rohlings vorgesehen werden.

Der erste Rohling liegt zu Beginn des Verfahrens zweckmässigerweise in Drahtform vor, das heisst er ist ein drahtförmiges Halbzeug, was den Aufwand weiter reduzieren kann.

Zweckmässigerweise kann ein zweiter Rohling aufweisend einen Duplexstahl oder einen austenischen rostfreien Stahl bereitgestellt werden und das Antriebselement aus dem zweiten Rohling gefertigt werden. Ein solcher Stahl kann, insbesondere im Hinblick auf den Herstellungsaufwand, die Korrosionseigenschaften und die Lasteigenschaften, für das Antriebselement besonders geeignet sein. Beispielsweise kann der Stahl, welchen der zweite Rohling aufweist, ein A2, A4, Duplex, 1.4401, 1.4404, 1.4362, 1.4301 oder 1.4578 Stahl sein.

Der zweite Rohling liegt zu Beginn des Verfahrens zweckmässigerweise in Drahtform vor, das heisst er ist ein drahtförmiges Halbzeug, was den Aufwand weiter reduzieren kann. Insbesondere kann das Verfahren den Schritt "Gewindeformen am zweiten Rohling" aufweisen. In diesem Schritt kann am zweiten Rohling eine Gewindeform angebracht werden. Der Schritt des Gewindeformens am ersten Rohling und/oder der Schritt des Gewindeformens am zweiten Rohling wird zweckmässigerweise vor dem Zusammenfügen des ersten Rohlings und des zweiten Rohlings durchgeführt.

Der erste Rohling und der zweite Rohling werden zusammengefügt, zweckmässigerweise durch Laserschweissen oder Widerstandsschweissen.

Die Erfindung betrifft auch eine Bimetallschraube, die insbesondere in einem erfindungsgemässen Verfahren erhalten werden kann und/oder erhalten wird. Die Bimetallschraube ist ausgebildet mit einem Spitzenelement und einem Antriebselement, wobei das Spitzenelement und das Antriebselement eine unterschiedliche Materialzusammensetzung aufweisen. Die Bimetallschraube zeichnet sich dadurch aus, dass das Spitzenelement zumindest bereichsweise einen Stahl mit 0,07 bis 0,14 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan aufweist. Zusätzlich kann dieser Stahl weitere stahlübliche Beimengungen aufweisen, beispielsweise Vanadium (insbesondere < 0,2 gew.-%), Niob (insbesondere < 0,2% gew.-%), Titan (insbesondere < 0,2 gew.-%) und/oder Silizium (insbesondere < 0.5 gew.-%). Der Rest ist Eisen mit unvermeidlichen Verunreinigungen, beispielsweise Schwefel und/oder Phosphor, insbesondere jeweils < 0,02 gew.-%. Unter den Angaben "gew.-%" können in fachüblicher Weise Gewichtsprozentangaben verstanden werden. Vorzugsweise weist der Stahl einen Gewichtsanteil von 0,08 bis 0,12 gew.-% Kohlenstoff auf. Der Stahl des Spitzenelements kann insbesondere mit Stickstoff aus der Gasphase einsatzgehärt und/oder aufgekohlt sein. Insbesondere kann der Stahl des Spitzenelements ein martensitisch gehärteter, rostfreier Stahl sein.

Mit einer solchen Schraube können die zuvor beschriebenen Vorteile des Stahls in einem Produkt umgesetzt werden.

Zweckmässigerweise kann das Antriebselement zumindest bereichsweise einen Duplexstahl oder einen austenischen rostfreien Stahl aufweisen. Ein solcher Stahl kann, insbesondere im Hinblick auf den Herstellungsaufwand, die Korrosionseigenschaften und die Lasteigenschaften, für das Antriebselement besonders geeignet sein. Beispielsweise kann der besagte Stahl des Antriebselements ein A2, A4, Duplex, 1.4401, 1.4404, 1.4362, 1.4301 oder 1.4578 Stahl sein.

Merkmale, die im Zusammenhang mit dem Verfahren zum Herstellen einer Bimetallschraube erläutert werden, können auch bei der Bimetallschraube zum Einsatz kommen, so wie auch umgekehrt Merkmale, die im Zusammenhang mit der Bimetallschraube erläutert werden, auch beim Verfahren zum Herstellen einer Bimetallschraube zum Einsatz kommen können. Insbesondere kann die Bimetallschraube im beschriebenen Verfahren gefertigt werden, das heisst die Bimetallschraube kann das Erzeugnis des beschriebenen Verfahrens sein. Insbesondere können die im Zusammenhang mit dem Verfahren und der Schraube beschriebenen Stähle dieselben sein.

Das Einführende der Bimetallschraube ist am Spitzenelement angeordnet. Das Antriebselement weist insbesondere einen Drehantrieb zum Drehen der Bimetallschraube auf, beispielsweise einen Schraubenkopf mit Aussenmehrkantstruktur oder eine Innenmehrkantstruktur. Insbesondere können das Antriebselement und das Spitzenelement zusammen den Schaft der Bimetallschraube bilden. Vorzugsweise weisen das Antriebselement und das Spitzenelement ein durchgehendes Gewinde auf.

Die Bimetallschraube kann vorzugsweise eine selbstschneidende Bimetallschraube sein. Sie kann insbesondere eine Betonschraube, das heisst eine Schraube zum Einschneiden in Beton sein.

Das Verhältnis des Aussendurchmessers eines Gewindes der Bimetallschraube zur Gewindesteigung des Gewindes kann im Bereich von 1 bis 2, insbesondere im Bereich von 1,2 bis 1,45 liegen. Dies sind typische Gewindedimensionen für Schrauben, die zum selbstschneidenden Eindrehen in mineralische Substrate wie beispielsweise Beton vorgesehen sind. Unter der Steigung kann insbesondere der axiale Abstand aufeinander folgender Windungen eines Gewindegangs verstanden werden. Nach der Erfindung kann auch ein Betonsubstrat mit einer Bohrung vorgesehen sein, in die eine erfindungsgemässe Bimetallschraube eingedreht ist, wobei im Betonsubstrat eine Negativform zum Schneidgewinde der Bimetallschraube gebildet ist. Demgemäss ist die Bimetallschraube unter Bildung eines Gegengewindes selbstschneidend in die Bohrung im Betonsubstrat eingedreht.

Die Erfindung wird nachfolgend anhand bevorzugter Ausführungsbeispiele näher erläutert, die schematisch in der beiliegenden Figur dargestellt sind, wobei einzelne Merkmale der nachfolgend beschriebenen Ausführungsbeispiele im Rahmen der Erfindung grundsätzlich einzeln oder in beliebiger Kombination realisiert werden können. In der Figur zeigt schematisch:

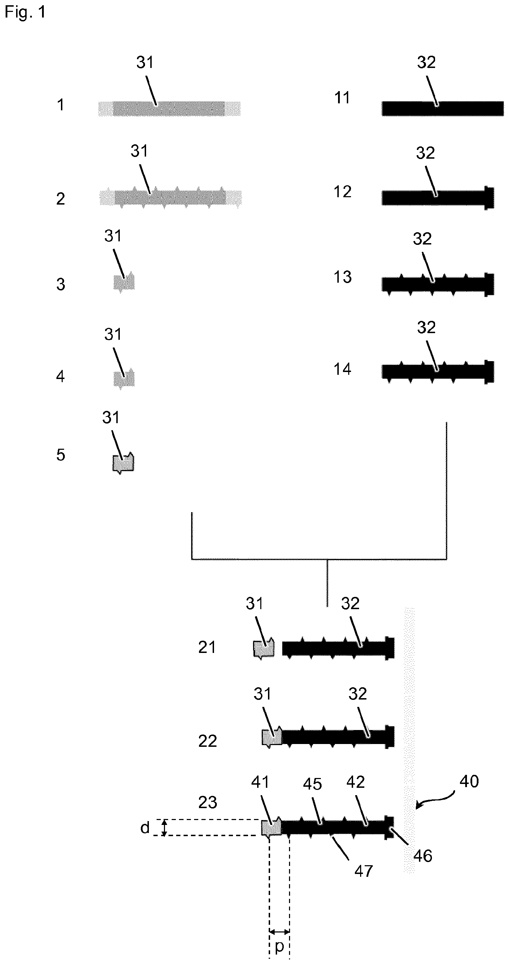

- Figur 1:: ein schematisches Ablaufdiagramm eines erfindungsgemässen Herstellungsverfahrens.

Figur 1 zeigt schematisch ein Ablaufdiagramm einer möglichen Ausgestaltung eines erfindungsgemässen Verfahrens zum Herstellen einer Bimetallschraube 40 mit einem Spitzenelement 41 und einem Antriebselement 42.

Um das Spitzenelement 41 zu erhalten wird in Schritt 1 ein, vorzugsweise drahtförmiger, erster Rohling 31 aus einem Stahl enthaltend 0,07 bis 0,14 gew.-%, vorzugsweise 0,08 bis 0,12 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan bereitgestellt. Zusätzlich kann der Stahl weitere stahlübliche Beimengungen aufweisen, beispielsweise Vanadium (insbesondere < 0,2 gew.-%), Niob (insbesondere < 0,2% gew.-%), Titan (insbesondere < 0,2 gew.-%) und/oder Silizium (insbesondere < 0.5 gew.-%). Der Rest ist Eisen mit unvermeidlichen Verunreinigungen, beispielsweise Schwefel und/oder Phosphor, insbesondere jeweils < 0,02 gew.-%.

Sodann folgt in Schritt 2 ein Gewindeformen am ersten Rohling 31, wodurch am ersten Rohling 31 ein Aussengewindeabschnitt gebildet wird. Das Gewindeformen kann insbesondere ein Gewindewalzen sein.

Anschliessend wird der erste Rohling 31 in Schritt 3 abgelängt und in Schritt 4 gereinigt.

Im anschliessenden Schritt 5 wird der als Schraubenform ausgebildete erste Rohling 31 bei einer Temperatur grösser 900°C, insbesondere zwischen 1000°C und 1150°C, besonders bevorzugt zwischen 1030°C und 1100°C, in einer stickstoffhaltigen Gasatmosphäre gehärtet, wobei der Stickstoffpartialdruck der Gasatmosphäre vorzugsweise zwischen 0.05 bar und 0.6 bar liegt, bevorzugt kleiner als 0.3 bar ist und besonders bevorzugt kleiner als 0.20 bar ist. Optional kann die Gasatmosphäre auch Kohlenstoff enthalten. Hierauf folgend wird der erste Rohling 31, immer noch in Schritt 5, abgeschreckt, insbesondere gasabgeschreckt, anschliessend tiefgekühlt, insbesondere bei Temperaturen unter minus 80°, beispielsweise bei minus 150°C, und schliesslich angelassen, vorzugsweise in einem Temperaturbereich zwischen 150°C und 500°C, besonders bevorzugt zwischen 200°C und 250°C, und/oder einer Haltezeit zwischen 1 Stunde und 5 Stunden.

Um das Antriebselement 42 zu erhalten wird in Schritt 11 ein, vorzugsweise drahtförmiger, zweiter Rohling 32 aus einem Duplexstahl oder einen austenischen rostfreien Stahl bereitgestellt.

Anschliessend wird in Schritt 12 am zweiten Rohling 32 ein Kopf geformt, beispielsweise durch Stauchen. Der Kopf kann bei der fertigen Bimetallschraube 40 den Drehantrieb 46 bilden.

Sodann folgt in Schritt 13 ein Gewindeformen am zweiten Rohling 32, wodurch am zweiten Rohling 32 ein Aussengewindeabschnitt gebildet wird. Das Gewindeformen kann insbesondere ein Gewindewalzen sein.

Anschliessend wird der zweite Rohling 32 in Schritt 14 gereinigt.

In Schritt 21 wird der erste Rohling 31 vor dem zweiten Rohling 32 angeordnet und in eine Position gebracht, in welcher der erste Rohling 31 den zweiten Rohling 32 berührt und der Aussengewindeabschnitt am ersten Rohling 31 eine Verlängerung des Aussengewindeabschnitts am zweiten Rohling 32 bildet.

Anschliessend werden in Schritt 22 der erste Rohling 31 und der zweite Rohling 32, beispielsweise durch Laserschweissen oder Widerstandsschweissen, zusammengefügt.

Der Verbund aus erstem Rohling 31 und zweitem Rohling 32 kann fakultativ in Schritt 23 passiviert werden.

Erhalten wird schliesslich die bei 23 gezeigte Bimetallschraube 40 mit einem metallischen Spitzenelement 41 und einem hierzu materialverschiedenen metallischen Antriebselement 42, wobei das Spitzenelement 41 aus dem ersten Rohling 31 und das Antriebselement 42 aus dem zweiten Rohling 32 erhalten wird. Die Bimetallschraube 40 weist einen zylindrischen Schraubenschaft 45 auf, an dessen Ende ein Sechskantschraubenkopf vorgesehen ist, der einen Drehantrieb 46 bildet. Der Schraubenschaft 45 wird vom Antriebselement 42 und vom Spitzenelement 41 gemeinsam gebildet, und der Drehantrieb 46 befindet sich am rückwärtigen Endbereich des Antriebselements 42. Längs des Schraubenschafts 45 erstreckt sich, entlang des Antriebselements 42 und des Spitzenelements 41, ein als Schneidgewinde ausgebildetes Gewinde 47 mit einem Aussendurchmesser d und einer Steigung p.

Der Schraubenschaft 45 der Bimetallschraube 40 kann in eine Bohrung in einem mineralischen Substrat, insbesondere in einem Betonsubstrat, eingedreht werden, wobei das als Schneidgewinde ausgebildete Gewinde 47 beim Eindrehen ein korrespondierendes Gewinde im Substrat freischneiden kann.

## Patentansprüche

1. Verfahren zum Herstellen einer Bimetallschraube (40) mit einem Spitzenelement (41) und einem Antriebselement (42),
**dadurch gekennzeichnet,**
**dass** ein erster Rohling (31) aufweisend einen Stahl mit 0,07 bis 0,14 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan bereitgestellt wird und das Spitzenelement (41) aus dem ersten Rohling (31) gefertigt wird.

2. Verfahren nach Anspruch 1,
**gekennzeichnet durch** den Schritt:
Einsatzhärten des ersten Rohlings (31) mit Stickstoff aus der Gasphase, vorzugsweise bei Temperaturen zwischen 1000°C und 1150°C und/oder einem Stickstoffpartialdruck zwischen 0.05 und 0.3 bar.

3. Verfahren nach Anspruch 2,
**dadurch gekennzeichnet,**
**dass** das Einsatzhärten des ersten Rohlings (31) mit Stickstoff aus der Gasphase in Kombination mit einem Aufkohlen des ersten Rohlings (31) mit Kohlenstoff aus der Gasphase erfolgt.

4. Verfahren nach einem der Ansprüche 2 oder 3,
**gekennzeichnet durch** den Schritt:
- Gewindeformen am ersten Rohling (31),
wobei der Schritt des Einsatzhärtens des ersten Rohlings (31) im Anschluss an den Schritt des Gewindeformens am ersten Rohling (31) erfolgt.

5. Verfahren nach einem der vorstehenden Ansprüche,
**gekennzeichnet durch** den Schritt:
Tiefkühlen des ersten Rohlings (31) bei Temperaturen unter minus 80°C und anschliessendes Anlassen des Rohlings bei Temperaturen zwischen 150°C und 500°C.

6. Verfahren nach einem der vorstehenden Ansprüche,
**dadurch gekennzeichnet,**
**dass** ein zweiter Rohling (32) aufweisend einen Duplexstahl oder einen austenischen rostfreien Stahl bereitgestellt wird und das Antriebselement (42) aus dem zweiten Rohling (32) gefertigt wird.

7. Verfahren nach Anspruch 6,
**dadurch gekennzeichnet,**
**dass** der erste Rohling (31) und der zweite Rohling (32) durch Laserschweissen oder Widerstandsschweissen zusammengefügt werden.

8. Bimetallschraube (40)
mit einem Spitzenelement (41) und einem Antriebselement (42), wobei das Spitzenelement (41) und das Antriebselement (42) eine unterschiedliche Materialzusammensetzung aufweisen,
**dadurch gekennzeichnet,**
**dass** das Spitzenelement (41) zumindest bereichsweise einen Stahl mit 0,07 bis 0,14 gew.-% Kohlenstoff, 13 bis 15 gew.-% Chrom, 1,3 bis 1,7 gew.-% Molybdän, 1,5 bis 2,0 gew.-% Nickel und 1,0 bis 1,5 gew.-% Mangan aufweist.

9. Bimetallschraube (40) nach Anspruch 8,
**dadurch gekennzeichnet,**
**dass** das Antriebselement (42) zumindest bereichsweise einen Duplexstahl oder einen austenischen rostfreien Stahl aufweist.

10. Bimetallschraube (40) nach einem der Ansprüche 8 oder 9,
**dadurch gekennzeichnet,**
**dass** das Verhältnis des Aussendurchmessers (d) eines Gewindes (47) der Bimetallschraube (40) zur Gewindesteigung (p) des Gewindes (47) im Bereich von 1 bis 2, insbesondere im Bereich von 1,2 bis 1,45 liegt.
